# EUROPEAN PATENT APPLICATION

(11) **EP 4 691 836 A1**
(43) Date of publication of application: **11.02.2026**
(21) Application number: 24193890.1
(22) Date of filing: 09.08.2024
(51) Int. Cl.: B60L 53/12, B60L 53/30, H02J 50/10

(54) **WIRELESS POWER TRANSMISSION ASSEMBLY**

(71) Applicant: Siemens Aktiengesellschaft, 80333 München (DE)
(72) Inventor: Ivancic, Nikola, 81825 München (DE); Percebon, Leandro, 81927 München (DE); Wuerz, Thomas, 85586 Poing (DE)
(74) Representative: Siemens Patent Attorneys

(57) **Abstract**

The invention relates to a wireless power transmission assembly (1). The wireless power transmission assembly (1) comprises a transmission unit (3) configured to wirelessly transmit power to an electric vehicle for charging a battery of the electric vehicle, and a fastening element (5) independently attachable to a ground surface (13) and to the transmission unit (3) for fixing the position of the transmission unit (3) relatively to the ground surface (13).

## Description

The invention relates to a wireless power transmission assembly for charging a battery of an electric vehicle.

Currently a battery of an electric vehicle is mostly (re-) charged by connecting the electric vehicle via a cable to an electrical power supply. However, besides this wired charging there is also the possibility of wireless charging the battery of an electric vehicle. Wireless charging is also known as inductive charging or cordless charging. It uses electromagnetic induction to transfer power from a primary induction coil outside the electric vehicle to a secondary induction coil of the electric vehicle. An alternating electric current flowing in the primary induction coil creates a fluctuating magnetic field which induces an alternating electric current in the secondary induction coil. The alternating current induced in the secondary induction coil is rectified to a direct current which is used to charge the battery of the electric vehicle.

Usually the primary induction coil is located on a ground surface and the secondary induction coil is located in the underside of the electric vehicle in order to enable placing the secondary induction coil close to the primary induction coil by parking the car accordingly. This requires to mount a device comprising the primary induction coil on the ground surface. An obvious way to do this is drilling mounting holes in the ground and using them to attach the device comprising the primary induction coil. However, not all ground surfaces are eligible to be drilled. For instance, a parking lot provider may not want his parking places to be drilled. Furthermore, the ground surface may be uneven which may prevent fixing the device to the ground or may require a device adapted to the ground surface.

It is an object of the present invention to provide a wireless power transmission assembly for charging a battery of an electric vehicle which is usable for various ground surfaces and circumstances.

According to the invention the object is solved by a wireless power transmission assembly with the features of claim 1.

Advantageous embodiments of the invention are the subject of the dependent claims.

A wireless power transmission assembly according to the invention comprises
- a transmission unit configured to wirelessly transmit power to an electric vehicle for charging a battery of the electric vehicle, and
- a fastening element independently attachable to a ground surface and to the transmission unit for fixing the position of the transmission unit relatively to the ground surface.

Hence, the transmission unit of the wireless power transmission assembly is not fixed directly to a ground surface but via a fastening element which is attached both to the ground surface and to the transmission unit. This has several advantages as compared to fixing the transmission unit directly to the ground surface. It enables to mount the same transmission unit on almost any ground surface by using a suitable fastening element, without having to adapt the transmission unit to the ground surface. Furthermore, it facilitates mounting of the transmission unit because the transmission unit is mounted on the fastening element. To that end the fastening element may be equipped with a definite and suitable structure for mounting the transmission unit on it.

In an embodiment of the invention, the fastening element has a first contact surface attachable to the ground surface. Hence, the first contact surface of the fastening element serves to establish an extended contact to the ground surface for firmly fixing the power transmission assembly on the ground surface.

A further embodiment of the wireless power transmission assembly comprises an adhesive to adhere the first contact surface to the ground surface. The use of an adhesive to adhere the first contact surface to the ground surface has several advantages. On the one hand, it enables mounting the fastening element on the ground surface without having to drill holes in the ground surface. On the other hand, it enables leveling an unequal ground surface. In particular, the adhesive may thus have a thickness which enables leveling an unequal ground surface.

A further embodiment of the wireless power transmission assembly comprises a fixation element anchorable in a ground beneath the ground surface and attachable to the fastening element. Using a fixation element, such as a screw, is an option to fix the fastening element to the ground when the ground surface does not allow fixing the fastening element by an adhesive, for instance in case the ground surface is a gravel surface. The formulation that the fastening element is fixed to the ground by means of a fixation element does not exclude the use of more than one fixation element to fix the fastening element to the ground.

In a further embodiment of the invention, the fastening element has a second contact surface attachable to the transmission unit. For instance, the second contact surface may be opposite to the first contact surface which is attachable to the ground surface.

In a further embodiment of the invention, the fastening element is a plate designed to be placed between the ground surface and the transmission unit. The fastening element may also have holes and/or recesses. Alternatively, the fastening element is a ring designed to surround the transmission unit. In the case that the fastening element is a plate, a top side of the fastening element may abut on a bottom side of the transmission unit. Holes and recesses can save material for the fastening element. In the case that the fastening element is a ring, the fastening element may abut on a lateral side of the transmission unit.

In a further embodiment of the invention, the fastening element is made at least partly from a material with high thermal conductivity. For instance, the fastening element is made at least partly from aluminium. This enables to dissipate heat from the transmission unit which is produced by a primary induction coil of the transmission unit when an electric current flows in the primary induction coil. Furthermore, the fastening element may be made at least partly from a material of high mechanical strength.

In a further embodiment of the invention, the transmission unit is mountable on the fastening element by a detachable connection. For instance, the transmission unit is mountable on the fastening element by a screw connection. Mounting the transmission unit on the fastening element by a detachable connection facilitates removing the transmission unit, for instance for maintenance or replacement of the transmission unit.

The characteristics, features and advantages of this invention described above, as well as the manner in which these are achieved, will be more clearly and fully understood in connection with the following description of exemplary embodiments which will be explained in more detail in connection with the drawings, wherein
figure 1 shows a schematic sectional view of a first embodiment of a wireless power transmission assembly according to the invention,
figure 2 shows a perspective exploded view of the wireless power transmission assembly shown in figure 1,
figure 3 shows a schematic sectional view of a second embodiment of a wireless power transmission assembly according to the invention, and
figure 4 shows a perspective view of the wireless power transmission assembly shown in figure 3,
figure 5 shows a top view of the fastening element of a third embodiment of a wireless power transmission assembly according to the invention,
figure 6 shows a top view of the fastening element of a fourth embodiment of a wireless power transmission assembly according to the invention,
figure 7 shows a top view of the fastening element of a fifth embodiment of a wireless power transmission assembly according to the invention.

Corresponding parts are designated with the same reference numerals in the figures.

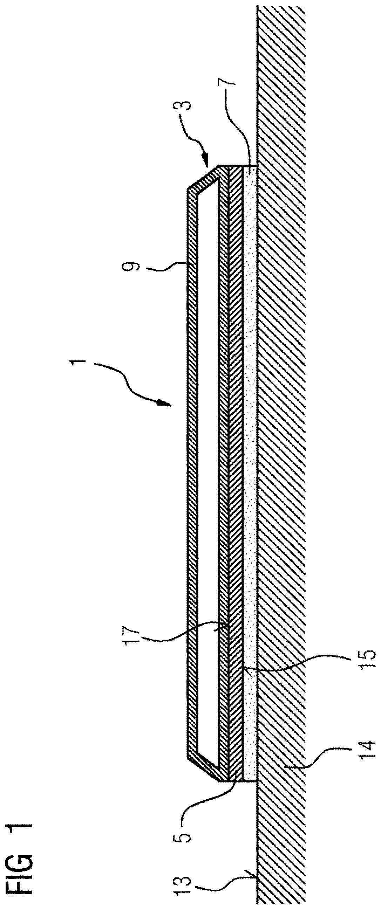

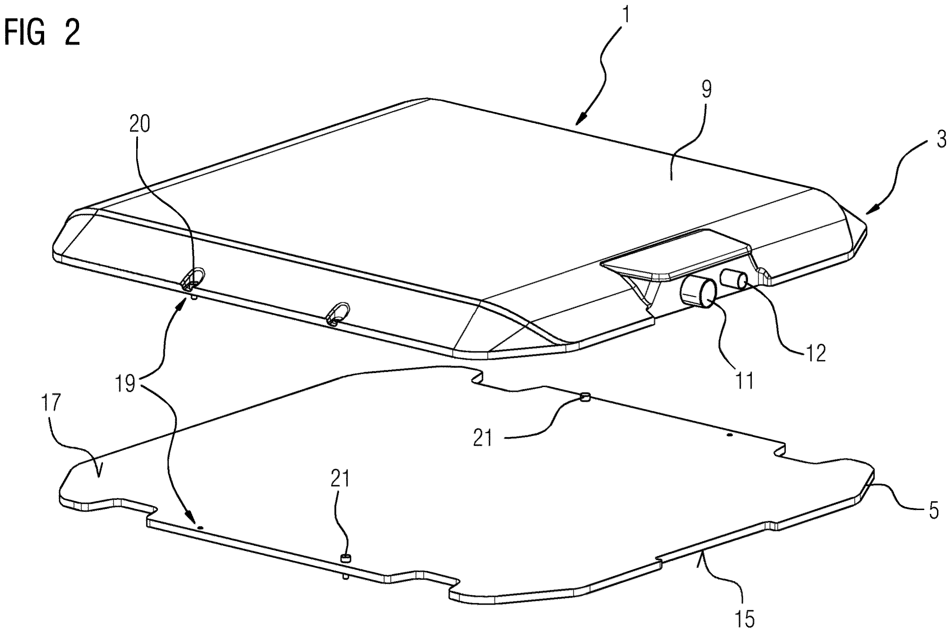

Figure 1 (FIG 1) and figure 2 (FIG 2) show a first embodiment of a wireless power transmission assembly 1 according to the invention. Figure 1 shows a schematic sectional view of the wireless power transmission assembly 1 and figure 2 shows a perspective exploded view of the wireless power transmission assembly 1. The wireless power transmission assembly 1 comprises a transmission unit 3, a fastening element 5 and an adhesive 7.

The transmission unit 3 is configured to wirelessly (inductively) transmit power to an electric vehicle for charging a battery of the electric vehicle. To that end, the transmission unit 3 comprises a primary induction coil (not shown in the figures) by means of which power (energy) is inductively transmittable to a secondary induction coil of an electric vehicle to charge a battery of the electric vehicle. More precisely, when an alternating electric current flows in the primary induction coil, a fluctuating magnetic field is created by the primary induction coil. By electromagnetic induction this magnetic field induces an alternating electric current in the secondary induction coil of the electric vehicle and thereby transmits wirelessly power (energy) to the electric vehicle which is used to charge the vehicle's battery.

The transmission unit 3 comprises a housing 9 inside of which the primary induction coil is located, and electric connections 11, 12 to electrically contact the transmission unit 3 and in particular the primary induction coil.

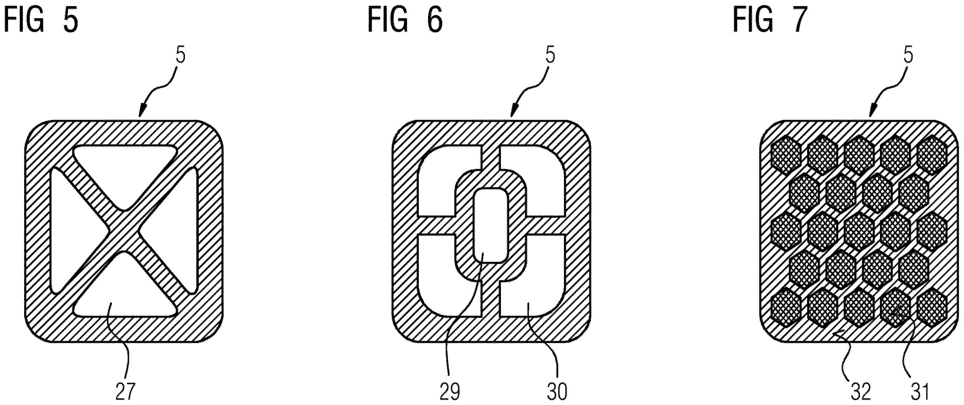

The fastening element 5 is independently attachable to a ground surface 13 and to the transmission unit 3 for fixing the position of the transmission unit 3 relatively to the ground surface 13. The fastening element 5 is a plate having a first contact surface 15 attachable to the ground surface 13 and, opposite to the first contact surface 15, a second contact surface 17 attachable to the transmission unit 3. Hence, the fastening element 5 is placed between the ground surface 13 and the transmission unit 3. In other embodiments, the fastening element 5 may have holes and/or recesses, and the first contact surface 15 and/or the second contact surface 17 might not be flat or continuous, cf. figures 5 to 7 for examples.

The transmission unit 3 is mounted on the fastening element 5 by a detachable connection 19. For instance, the detachable connection 19 may be a screw connection comprising screws 20 which connect the housing 9 of the transmission unit 3 and a border area of the fastening element 5.

Preferably the fastening element 5 is adhered to the ground surface 13 by the adhesive 7 which is applied to the first contact surface 15 of the fastening element 5. For a ground surface 13 which does not allow fixing the fastening element 5 by the adhesive 7, such as a gravel surface, the fastening element 5 can be fixed to a ground 14 beneath the ground surface 13 by fixation elements 21, such as screws, which are anchorable in the ground 14 and attachable to the fastening element 5.

The fastening element 5 is made at least partly from a material with high thermal conductivity, such as aluminium, and/or from a material of high mechanical strength.

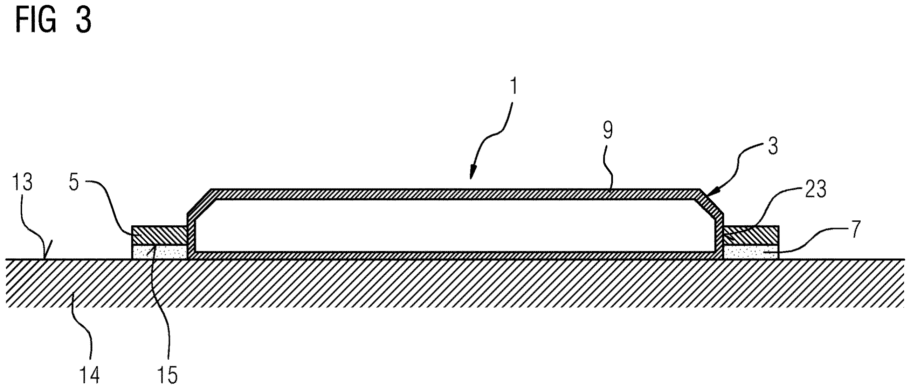

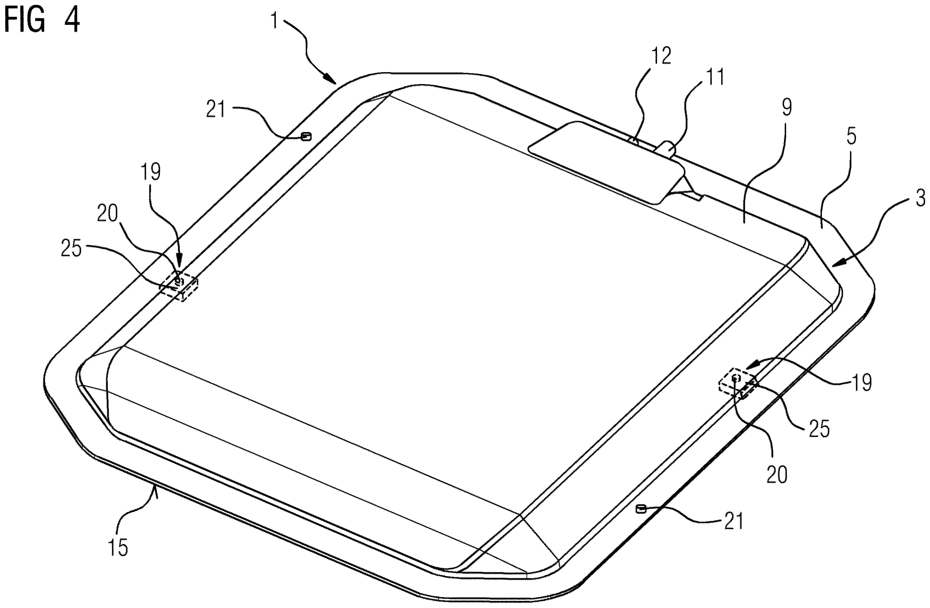

Figure 3 (FIG 3) and figure 4 (FIG 4) show a second embodiment of a wireless power transmission assembly 1 according to the invention. Figure 3 shows a schematic sectional view of the wireless power transmission assembly 1 and figure 4 shows a perspective view of the wireless power transmission assembly 1. The wireless power transmission assembly 1 comprises a transmission unit 3, a fastening element 5 and an adhesive 7.

Again, the transmission unit 3 is configured to wirelessly (inductively) transmit power to an electric vehicle for charging a battery of the electric vehicle. To that end, the transmission unit 3 comprises a primary induction coil (not shown in the figures) by means of which power (energy) is inductively transmittable to a secondary induction coil of an electric vehicle to charge a battery of the electric vehicle. The transmission unit 3 comprises a housing 9 inside of which the primary induction coil is located.

The fastening element 5 is independently attachable to a ground surface 13 and to the transmission unit 3 for fixing the position of the transmission unit 3 relatively to the ground surface 13. The fastening element 5 is a ring which surrounds the transmission unit 3 and abuts on a lateral surface 23 of the transmission unit 3 (more precisely, the fastening element 5 abuts on a lateral surface 23 of the housing 9 of the transmission unit 3).

The fastening element 5 has a first contact surface 15 attachable to the ground surface 13. Preferably the fastening element 5 is adhered to the ground surface 13 by the adhesive 7 which is applied to the first contact surface 15 of the fastening element 5. For a ground surface 13 which does not allow fixing the fastening element 5 by the adhesive 7, such as a gravel surface, the fastening element 5 can be fixed to a ground 14 beneath the ground surface 13 by fixation elements 21, such as screws, which are anchorable in the ground 14 and attachable to the fastening element 5.

The transmission unit 3 is mounted on the fastening element 5 by a detachable connection 19. For instance, the detachable connection 19 may be a screw connection comprising screws 20 which connect the housing 9 of the transmission unit 3 and inwardly directed protrusions 25 of the fastening element 5.

Figures 5 to 7 show further embodiments of a wireless power transmission assembly 1. These embodiments differ from the embodiment shown in figures 1 and 2 only by the fastening element 5, respectively. Therefore, only the fastening element 5 is shown, respectively.

Figure 5 (FIG 5) shows a top view of the fastening element 5 of a third embodiment of a wireless power transmission assembly 1. The fastening element 5 of this embodiment has four holes 27. The holes 27 have triangular shape, respectively. In other embodiments, the fastening element 5 may have holes 27 of different number, shape and/or location.

Figure 6 (FIG 6) shows a top view of the fastening element 5 of a fourth embodiment of a wireless power transmission assembly 1. The fastening element 5 of this embodiment has recesses 29, 30. A first recess 29 forms a central region of the fastening element 5, and four further bended recesses 30 surround the first recess 29. In other embodiments, the fastening element 5 may have recesses 29, 30 of different number, shape and/or location.

Figure 7 (FIG 7) shows a top view of the fastening element 5 of a fifth embodiment of a wireless power transmission assembly 1. The fastening element 5 of this embodiment is made from two different materials. The fastening element 5 has a plurality of components 31 which are made from a first material and are imbedded in a web-like structure 32 which is made from a second material. For instance, the first material may be aluminium and the second material may be a plastic material. Other embodiments of the fastening element 5 may be made of different materials in a different way.

Although the invention has been illustrated and described in detail by preferred embodiments, the invention is not limited by the examples disclosed and other variations may be derived therefrom by those skilled in the art without departing from the scope of the invention.

Independent of the grammatical term usage, individuals with male, female or other gender identities are included within the term.

## Claims

1. Wireless power transmission assembly (1), comprising
- a transmission unit (3) configured to wirelessly transmit power to an electric vehicle for charging a battery of the electric vehicle, and
- a fastening element (5) independently attachable to a ground surface (13) and to the transmission unit (3) for fixing the position of the transmission unit (3) relatively to the ground surface (13).

2. Wireless power transmission assembly (1) according to claim 1, wherein the fastening element (5) has a first contact surface (15) attachable to the ground surface (13).

3. Wireless power transmission assembly (1) according to claim 1 or 2, comprising an adhesive (7) to adhere the first contact surface (15) to the ground surface (13).

4. Wireless power transmission assembly (1) according to claim 3, wherein the adhesive (7) has a thickness which enables leveling an unequal ground surface (13).

5. Wireless power transmission assembly (1) according to any of the preceding claims, comprising a fixation element (21) anchorable in a ground (14) beneath the ground surface (13) and attachable to the fastening element (5).

6. Wireless power transmission assembly (1) according to any of the preceding claims, wherein the fastening element (5) has a second contact surface (17) attachable to the transmission unit (3).

7. Wireless power transmission assembly (1) according to any of the preceding claims, wherein the fastening element (5) is a plate designed to be placed between the ground surface (13) and the transmission unit (3).

8. Wireless power transmission assembly (1) according to any of the preceding claims, wherein the fastening element (5) has holes (27) and/or recesses (29, 30).

9. Wireless power transmission assembly (1) according to any of the claims 1 to 5, wherein the fastening element (5) is a ring designed to surround the transmission unit (3).

10. Wireless power transmission assembly (1) according to any of the preceding claims, wherein the fastening element (5) is made at least partly from a material with high thermal conductivity.

11. Wireless power transmission assembly (1) according to any of the preceding claims, wherein the fastening element (5) is made from two or more different materials.

12. Wireless power transmission assembly (1) according to any of the preceding claims, wherein the fastening element (5) is made at least partly from aluminium.

13. Wireless power transmission assembly (1) according to any of the preceding claims, wherein the fastening element (5) is made at least partly from a material of high mechanical strength.

14. Wireless power transmission assembly (1) according to any of the preceding claims, wherein the transmission unit (3) is mountable on the fastening element (5) by a detachable connection (19).

15. Wireless power transmission assembly (1) according claim 14, wherein the detachable connection (19) is a screw connection.
